# EUROPÄISCHE PATENTSCHRIFT

(11) **EP 3 194 805 B1**
(45) Veröffentlichungstag und Bekanntmachung des Hinweises auf die Patenterteilung: **29.08.2018**
(21) Anmeldenummer: 15781859.2
(22) Anmeldetag: 16.09.2015
(51) Int. Cl.: F16G 1/28, F16G 5/20, F16G 1/08, F16G 5/06

(54) **KRAFTÜBERTRAGUNGSRIEMEN MIT EINER TEXTILAUFLAGE UND VERFAHREN ZU SEINER HERSTELLUNG**
POWER TRANSMISSION BELT WITH A TEXTILE LAYER AND METHOD FOR THE PRODUCTION THEREOF
COURROIE DE TRANSMISSION DE FORCE POURVUE D'UNE COUCHE DE REVÊTEMENT TEXTILE ET PROCÉDÉ DE FABRICATION DE LADITE COURROIE

(30) Priorität: 17.09.2014 DE 102014013462
(43) Veröffentlichungstag der Anmeldung: 26.07.2017
(73) Patentinhaber: Arntz Beteiligungs GmbH & Co. KG, 37671 Höxter (DE)
(72) Erfinder: OLLENBORGER, Willi, 37639 Bevern (DE); MURSCHEL, Oleg, 33102 Paderborn (DE)
(74) Vertreter: Rehmann, Thorsten
(86) Internationale Anmeldenummer: PCT/DE2015/000460
(87) Internationale Veröffentlichungsnummer: WO 2016/041538

(56) Entgegenhaltungen:
- DE-A1-102006 060 906
- US-A- 4 265 627
- US-A- 4 332 576

## Beschreibung

Die Erfindung betrifft einen Kraftübertragungsriemen mit einer Laufrichtung, mindestens einem Kraftübertragungselement, vorzugsweise einer Mehrzahl von parallel zueinander beabstandeten Kraftübertragungselementen und einer auf eine Oberfläche der Kraftübertragungselemente aufgebrachten bahnförmigen Textillage, die die Kraftübertragungselemente nur bereichsweise abdeckt, sowie ein Verfahren zu seiner Herstellung. Die Riemen können ein Mehrrippen-, Zahn- oder Keilprofil aufweisen. Sie laufen in Riemenscheiben mit passendem Profil.

Ein solcher Kraftübertragungsriemen ist beispielsweise aus der DE 10 2009 012 395 A1 bekannt. Kraftübertragungsriemen sind beispielsweise Keilriemen, Keilrippenriemen und Zahnriemen. Sie dienen zur Kraftübertragung und haben in der Regel einen polymeren Körper, beispielsweise aus Gummi, Thermoplast oder Urethan, mit mehreren wenigstens entlang einer Seite des Riemens ausgebildeten Kraftübertragungselementen (Keil, Keilrippen bzw. Zähnen), die ggf. zueinander regelmäßig beabstandet sind. In den Körper ist in der Regel ein Zugstrang als Last tragendes Teil eingebettet. Vorzugsweise sind die Kraftübertragungselemente mit einem faserigen Material verstärkt, wodurch die Scherfestigkeit und die Verschleißfestigkeit verbessert werden kann.

Die Kraftübertragungselemente (Zähne) des bekannten Kraftübertragungsriemens sind nur an der Oberseite der Köpfe beschichtet, damit ein besonders verschleißfestes und unter Umständen auch wenig flexibles Beschichtungsmaterial ausgewählt werden kann, das an die Riemenabtragungsfläche, auf der die Zahnköpfe gleiten, abgepasst ist.

Die DE 10 2006 060 906 A1 beschreibt ein Verfahren zur Herstellung eines flankenbeschichteten Keilrippenriemens. Durch die Flankenbeschichtung soll eine verringerte Geräuschentwicklung und eine verbesserte Verschleißeigenschaft erreicht werden. Die Kopfseite der Rippen ist unbeschichtet.

Die DE 698 29 125 T2 offenbart einen Zahnriemen, bei dem verschleißfestes Gewebe entlang dem die Riemenzähne aufweisenden Umfang angeordnet ist. Die Zähne und die Zahnzwischenräume sind also vollständig beschichtet.

Aus der US 3,964,328 A ist ein Gewebe aus dehnbarem Nylon mit einer thermoplastischen Schicht aus Polyethylen bekannt, die durch Verbonden an einer Außenfläche des Gewebes angebracht ist. Dieses Gewebe ist als verschleißfestes Gewebe und reibungsmodifizierende Verstärkung an einer Umfangsfläche der Kraftübertragungselemente angebracht.

Die US 4,895,555 A offenbart ein bahnförmiges Vlies, das als Verstärkung in einem gegossenen Urethan-Riemenkörper dient und unter einem Zugteil in einem Stegbereich eines Riemens zusammengedrückt und als Verstärkungsfaser zur Verbesserung der Scherfestigkeit der Kraftübertragungselemente vorgesehen ist.

Die Anordnung der Riemenscheiben, die über die Kraftübertragungsriemen angetrieben werden, wird zunehmend komplizierter. Die zu übertragenen Leistungen werden höher und Drehungleichförmigkeiten steigen. Mit den steigenden Anforderungen an Riemengetriebe erhöht sich auch die Anforderung an den Riemen und dessen Eigenschaften. Eine wichtige Eigenschaft des Riemens ist neben der Tragfähigkeit die Geräuschentwicklung. Riemengeräusche führen zu Reklamationen.

Die EP 2 072 857 B1 beschreibt einen Zahnriemen, der zur Geräuschdämpfung mit einer Gewebeauflage versehen ist, bei der das Verhältnis aus Masse der texturierten Schussfäden zur Masse der Kettfäden zwischen 3 und 5,17 liegt.

Zur Geräuschdämpfung ist in der DE 602 08 888 T2 ein Treibriemen mit einer Vliesbeschichtung beschrieben, bei dem der Vliesbereich nicht die Eigenschaft gleichmäßig beabstandeter und ausgerichteter Fasern aufweist, sondern die das Vlies bildenden Fasern in der Matrix willkürlich ausgerichtet sind. Dadurch wird das Erzeugen und Aufrechterhalten von Eigenfrequenz-Oberschwingungen verringert und der willkürlich ausgerichtete Bereich dämpft diese Schwingungen erheblich.

Aus der DE 10 2010 015 901 A1 ist ein Keilrippenriemen mit einem elastischen Grundkörper auf der Basis eines Vulkanisats bekannt, der eine Decklage als Riemenrücken und einen Unterbau mit einer Kraftübertragungszone aufweist, die mit einer Gewebeauflage versehen ist. Die Gewebeauflage wird aus Kettfäden und Schussfäden gebildet. Der Keilrippenriemen zeichnet sich dadurch aus, dass die Kettfäden in Riemenlängsrichtung und die Schussfäden in Riemenquerrichtung verlaufen. Die Fäden sind dehnbar, wobei die Dehnbarkeit der Schussfäden größer ist als die der Kettfäden. Durch eine Texturierung der Fäden sollen diese eine bessere Haftung im Gespinstverband, eine erhöhte mechanische Beanspruchbarkeit, einen volleren Griff, d.h. ein größeres Volumen und Bauschigkeit, sowie das Textilgewebe an sich eine höhere Elastizität und ein besseres Wärmeisolierungsvermögen erhalten.

Von dieser Problemstellung ausgehend soll der eingangs beschriebene Kraftübertragungsriemen so verbessert werden, dass eine Geräuschdämpfung auch unter erschwerten Einsatzbedingungen möglich wird.

Die Problemlösung erfolgt durch die unabhängigen Patentansprüche. Der erfindungsgemäße Kraftübertragungsriemen zeichnet sich dadurch aus, dass die Textillage gedehnt ist und die Kraftübertragungselemente mit der Textillage überzogen sind.

Durch diese Ausgestaltung sind die Kraftübertragungselemente sowohl in ihrem Kopfbereich als auch an ihren Flanken und auch die Zwischenräume zwischen den Kraftübertragungselementen mit der Textillage bereichsweise abgedeckt. Dennoch wird eine erhöhte Versteifung des Riemens vermieden. Schwingungen werden dadurch unterbunden, wodurch die Geräuschentwicklung niedrig bleibt. Durch die nur bereichsweise Abdeckung des Kraftübertragungselements bzw. der Kraftübertragungselemente kann außerdem der Reibwert des Riemens genauer eingestellt werden, weil dieser nicht mehr allein von dem Reibwert der Textilbeschichtung abhängig ist.

Die Textillage ist mit einer Vielzahl von Einschnitten versehen, die vorzugsweise hintereinander in Längsrichtung der Kraftübertragungselemente verlaufen und in Querrichtung zueinander beabstandet sind. Durch diese Ausgestaltung ist es möglich, dass sich die Textillage beim Ausbilden der Kraftübertragungselemente in der Vulkanisierungsform dehnt, sodass die Einschnitte zu Ausnehmungen bzw. Löchern werden, die dann die Bereiche ohne Textil auf der Oberfläche der Kraftübertragungselemente ausbilden. Das in Querrichtung gedehnte Vlies ist in Laufrichtung des Riemens elastisch. Bei einem Keilrippenriemen entspricht die Laufrichtung des Riemens der Längsrichtung der Rippen. Bei einem Zahnriemen entspricht die Laufrichtung des Riemens der Querrichtung der Zähne.

Der von der Textillage abgedeckte Bereich der Oberfläche der Kraftübertragungselemente beträgt vorzugsweise mindestens 10 % und maximal 90 %.

Vorzugsweise weist die Textillage ein Flächengewicht von 10 bis 350 g/m² auf.

Die Textillage kann aus Natur- und/oder Kunststofffasern bestehen, wobei vorzugsweise ein Gemisch aus 50 % Polyamidfasern und 50 % Polyesterfasern verwendet wird. Grundsätzlich können aber auch die in der DE 602 08 888 T2 beschriebenen Materialien verwendet werden.

Zur Erzielung einer reibungsmindernden Wirkung weist die Textillage vorzugsweise Fasern aus Polytetrafluorethylen (PTFE) auf.

Die Textillage kann ein Gewebe oder ein Vlies sein.

Zur Verbesserung der Anbindung der Fasern an das Riemenmaterial ist die Textillage vorzugsweise mit einem Haftvermittler (beispielsweise RFL) ausgestattet. Dadurch wird die Lebenszeit des Riemens erhöht. Der Kraftübertragungsriemen besteht aus einem üblichen Aufbau mit Schichten aus verschiedenen Gummimischungen, wobei in einer der Schichten sich in Laufrichtung erstreckende Zugstränge enthalten sind.

Die Herstellung des Kraftübertragungsriemens erfolgt an sich konventionell. In einem mehrteiligen Vulkanisierwerkzeug, von dem mindestens ein Teil eine Profilierung aufweist, durch die während der Vulkanisation Kraftübertragungselemente mit einer Längsrichtung L und einer Querrichtung Q ausgebildet werden. Vor der Vulkanisation wird auf der dem profilierten ersten Teil des Werkzeugs zugewandten Seite des aus mehreren elastomeren Lagen bestehenden Aufbaus eine mit einer Mehrzahl sich in Längsrichtung L erstreckenden Einschnitten versehene Textillage aufgelegt, die sich beim Ausbilden der Kraftübertragungselemente während der Vulkanisation dehnt, wodurch sich dann die Bereiche ausbilden, in denen die Oberfläche des Kraftübertragungselements nicht von dem Textil abgedeckt wird.

Die Einschnitte verlaufen vorzugsweise in mehreren parallelen Reihen und sind hintereinander angeordnet. Durch die Dehnung in Querrichtung erhält die textile Lage eine höhere Elastizität in Längsrichtung und auch in der Laufrichtung des Kraftübertragungsriemens.

Mit Hilfe einer Zeichnung soll ein Ausführungsbeispiel der Erfindung nachfolgend näher beschrieben werden. Es zeigen:

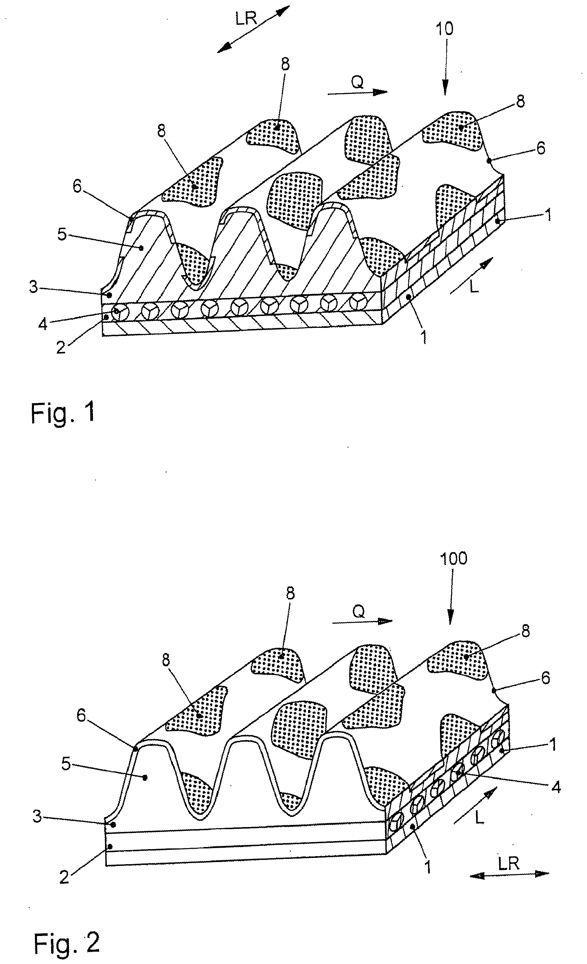

- Figur 1 -: eine perspektivische Teildarstellung eines Keilrippenriemens im Schnitt,
- Figur 2 -: eine perspektivische Teildarstellung eines Zahnriemens im Schnitt,
- Figur 3 -: eine Teildraufsicht auf eine erfindungsgemäße Textilbahn,
- Figur 4 -: eine Teildraufsicht auf eine gedehnte Textilbahn.

Der Keilrippenriemen 10 oder der Zahnriemen 100 ist als geschlossenes umlaufendes Band ausgebildet und besteht im Wesentlichen aus einer ersten Lage 1, einer zweiten Lage 2, in der eine Mehrzahl sich in Laufrichtung LR erstreckende Zugstränge 4 eingebettet sind, und einer dritten Lage 3, die die Kraftübertragungselemente 5, also die Zähne 5a bzw. die Keilrippen 5b, ausbildet. Ein solcher Aufbau ist nicht zwingend. Die einzelnen Lagen können aus mehreren Schichten bestehen. Die zweite Lage kann durchaus entfallen. Die Kraftübertragungselemente 5 weisen eine Längsrichtung L und eine Querrichtung Q auf. Beim Keilrippenriemen 10 entspricht die Längsrichtung L der Laufrichtung LR. Beim Zahnriemen 100 entspricht die Querrichtung Q der Laufrichtung LR. Die Lagen 1, 2, 3 bestehen aus identischen oder verschiedenen Elastomermischungen auf Basis von vulkanisierten Kautschukmischungen. Als Kautschukkomponente kann vorzugsweise CR, ACSM, EPDM, SBR, BR oder HNBR, bzw. ein Verschnitt der genannten Kautschuke verwendet werden. Bei Zahnriemen kann zum Beispiel auch Polyurethan verwendet werden. Die Kraftübertragungselemente 5 sind mit einer gedehnten Textilbahn 6 überzogen, wobei die Textilbahn 6 die Kraftübertragungselemente 5 nur bereichsweise abdeckt. Als Textilbahn kann ein Vlies oder ein Gewebe verwendet werden.

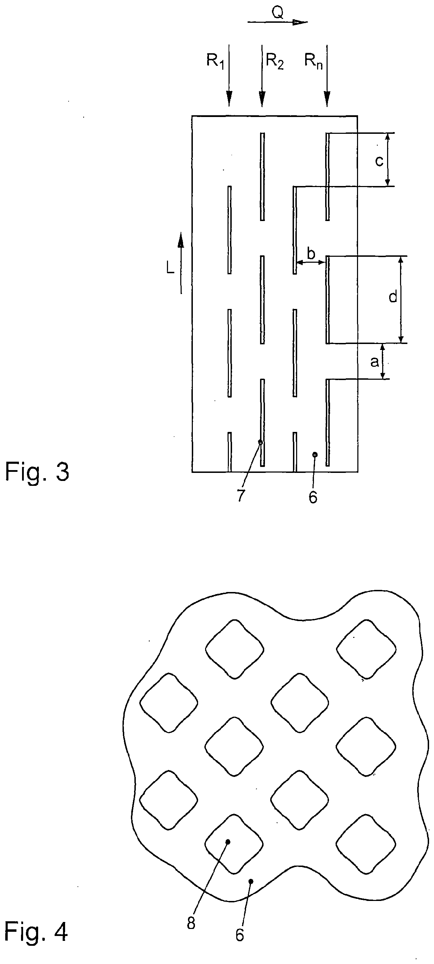

Nachfolgend wird die Erfindung nur noch in Bezug auf einen Keilrippenriemen 10 beschrieben. Für einen Zahnriemen 100 gilt das Nachfolgende natürlich entsprechend. Um die Vliesbahn 6 in Querrichtung Q dehnen zu können, ist diese mit einer Mehrzahl von Einschnitten 7 versehen, die sich hintereinander in Längsrichtung L der Keilrippen 5b erstrecken und in Querrichtung Q zu-einander in Reihen R₁, R₂,...Rₙ parallel beabstandet sind (vgl. Figur 3). Der Abstand a der Einschnitte 7 in Längsrichtung L beträgt 0,5 bis 20 mm, wobei vorzugsweise 3 mm vorgesehen sind. Der Abstand b zwischen den Einschnitten 7 in Querrichtung Q beträgt auch 0,5 bis 20 mm, wobei hier bevorzugt 2 mm vorgesehen sind. Die Länge d der Einschnitte 7 beträgt 0,5 bis 20 mm und bevorzugt 4 mm. Der Versatz c der Einschnitte 7 beträgt ebenfalls 0,5 bis 20 mm und vorzugsweise 3 mm.

Die Einschnitte 7 werden vorzugsweise in das Vlies 6 in Bahnrichtung (Längsrichtung L) eingestanzt. Dadurch erhält das Vlies (die Bahn) 6 zunächst eine konstruktive Dehnung. Wenn sich beim anschließenden Vulkanisieren in der Prägephase die Keilrippen ausbilden, wird das gestanzte Vlies 6 quer zur Längsrichtung L gedehnt, und es bilden sich die periodisch angeordneten Bereiche aus. Die Prägephase ist ein Teilprozess im Vulkanisationsprozess. In der Prägephase wird der Aufbau nach der Konfektionierung (Rohling) in das Werkzeugprofil gedrückt, wobei sich die Rippen 5b im Riemen 10 ausprägen. Beim Ausprägen der Rippen 5b wird das Vlies 6 gedehnt, wodurch Bereiche 8 an der Oberfläche entstehen, die nicht vom Vlies abgedeckt sind. Diese Bereiche 8 entstehen über den gesamten Umfang des Riemens 10. Am Kopfbereich, den Flanken und in den Zwischenräumen zwischen den Keilrippen 5b.

Das gestanzte (ungedehnte) Vlies 6 kann auf ein nicht profiliertes Halbzeug (eine Bahn aus Kautschukmischung) aufgebracht werden, indem beispielsweise das Vlies 6 auf die Kautschukbahn plattiert wird. Dann erfolgt die Konfektionierung auf einer - hier nicht dargestellten - Trommel mit dem Aufbringen der Riemenbestandteile, wobei zunächst die erste Lage 1 (Decklage), dann die Zugstränge 4 und darauf die zweite Lage 2 aufgebracht werden und dann das mit dem Vlies 6 versehene Halbzeug aufgelegt wird. Anschließend wird dieser Schichtaufbau in einer Vulkanisierform vulkanisiert, wobei sich die Rippen 5b ausbilden und dabei die Textillage 6 in Querrichtung Q gedehnt wird, was zu einer höheren Dehnbarkeit in Längsrichtung L führt. Die Längsrichtung L der Rippen 5b ist die Laufrichtung LR des Keilrippenriemens 10. Die Einschnitte werden vorzugsweise in Bahnrichtung des Vlieses 6 eingestanzt. Das Vlies 6 muss entsprechend ausgerichtet auf die dritte Lage 3 aufgelegt werden.

Eine andere Möglichkeit der Herstellung des Keilrippenriemens 10 besteht darin, dass zunächst die erste Schicht 1 (Decklage) dann die Zugstränge 4, darauf die zweite Schicht 2 und dann eine Bahn 3 aus einer Kautschukmischung auf eine Trommel aufgelegt wird. Die mit den Einschnitten 7 versehene Vliesbahn 6 wird ohne sie zusätzlich zu dehnen auf den Rohwickel auf der Trommel aufgelegt. Durch vollflächiges oder punktuelles thermisches Aufpressen oder durch Aufbringen eines Klebstoffs zwischen Rohwickel und Vlies 6 kann dieses fixiert werden. Auch ist es möglich, das Vlies 6 zuvor zu einem Strumpf zu formen und dann über den Rohwickel zu ziehen. Bei der abschließenden Vulkanisation dieses Schichtaufbaus bilden sich dann die Rippen 5b aus, wodurch die Vlieslage 6 dann in Querrichtung Q gedehnt wird. Aus dem vulkanisierten Wickel können dann Riemen 10 gewünschter Breite geschnitten werden.

Die Herstellung des Keilrippenriemens 10 erfolgt in an sich konventioneller Weise. Gegenüber der bekannten Fertigung neu ist das Auflegen der mit Einschnitten 7 versehenen Vliesbahn 6 auf die Seite des Lagenaufbaus, die dem entsprechend profilierten Werkzeugteil zugewandt ist. Die Fertigung eines Zahnriemens 100 erfolgt also ebenso konventionell, ohne dass es hier nun einer tiefergehenden Erläuterung bedarf.

Die Einschnitte 7 werden in Faserrichtung (Längsrichtung L) des Vlieses 6 eingebracht. Durch die Einschnitte 7 wird die Dehnbarkeit der Vliesbahn 6 von der Elastizität der Fasern des Vlieses unabhängig, weil zur Dehnung der Vliesbahn 6 die Faser des Vlieses 6 nicht gedehnt werden muss. In Längsrichtung L des Vlieses 6 bzw. der Keilrippe 5b, die beim Rippenriemen 10 auch der Laufrichtung LR entspricht, wird die Elastizität erhöht.

Bei den zuvor angegebenen Längenabmessungen a, b, c, d kann sich eine Dehnung in Querrichtung von bis zu 300 % einstellen. Vor der Prägephase weist das Vlies eine Dehnung in Längsrichtung von 2 bis 20 % und nach der Prägephase bis 200 % auf.

Figur 4 zeigt einen Ausschnitt der gedehnten Vliesbahn 6. Es stellen sich freie Bereiche 8 ein, die das Gummimaterial der Keilrippen 5b an ihrer Oberfläche freilassen, wodurch der Reibbeiwert des Keilrippenriemens 10 gut eingestellt werden kann. Je größer die Fläche der vorgesehenen freien Bereiche 8, umso höher ist der Reibwert. Dennoch wird eine Versteifung des Keilrippenriemens 10 vermieden.

Das Flächengewicht des bahnförmigen Vlieses 6 beträgt vorzugsweise 10 bis 350 g/m². Es besteht aus einer Mischung von 50 % Polyamidfasern und 50 % Polyesterfasern (PET). Es ist aber auch denkbar, Naturfasern, Polyurethanfasern sowie Aramid in reiner Form oder als Verschnitt zu verwenden. Um die Reibung zu reduzieren, können zusätzlich auch PTFE-Fasern eingesetzt werden.

Die Summe der freien Bereiche 8, also der Teil der Oberfläche des Keilrippenriemens 10 an den Rippen 5b, der durch Elastomer gebildet wird, kann zwischen 10 und 90 % betragen. Entsprechend ist dann die mit der Vlieslage 6 bedeckte Oberfläche der Keilrippen 5b 90 bis 10 % groß. Dieses Verhältnis ist einerseits von der Geometrie (Maße a, b, c, d) der Einschnitte und andererseits davon abhängig, wie stark das Vlies 6 während der Prägephase in der Vulkanisierform gedehnt wurde.

Um das Anhaften der Vliesbahn 6 auf der Kautschukfolie beim Plattieren bzw. thermischen Fixieren zu verbessern, ist das Vlies 6 mit Klebepunkten versehen, die auf Polyethylen-Basis ausgestaltet sein können. Als weiterer Haftvermittler kann z.B. Resorzin-Formaldehyd-Latex verwendet werden. Zur Modifikation des Reibwertes können im Vlies 6 Graphit- und/oder PTFE-Partikel vorgesehen sein. Auch der Klebstoff, der die Adhäsion der Vliesbahn 6 auf der vorgefertigten Kautschuklage verbessern soll, kann mit Additiven versehen sein.

## Patentansprüche

1. Kraftübertragungsriemen mit einer Laufrichtung (LR), mindestens einem Kraftübertragungselement (5), vorzugsweise einer Mehrzahl von parallel zueinander beabstandeten Kraftübertragungselementen (5a, 5b) und einer auf eine Oberfläche der Kraftübertragungselemente (5a, 5b) aufgebrachten bahnförmigen Textillage (6), die gedehnt ist, wobei die Kraftübertragungselemente (5a, 5b) mit der Textillage (6) überzogen und nur bereichsweise abgedeckt sind, **dadurch gekennzeichnet, dass** die Textillage (6) mit einer Mehrzahl von Einschnitten (7) versehen ist, die sich hintereinander in Längsrichtung (L) der Kraftübertragungselemente (5a, 5b) erstrecken und in Querrichtung (Q) zueinander in Reihen (R₁, R₂, ... Rₙ) parallel beabstandet sind.

2. Kraftübertragungsriemen nach Anspruch 1, **dadurch gekennzeichnet, dass** der von der Textillage (6) abgedeckte Bereich der Oberfläche der Kraftübertragungselemente (5a, 5b) mindestens 10 % und maximal 90 % beträgt.

3. Kraftübertragungsriemen nach Anspruch 1 oder 2, **dadurch gekennzeichnet, dass** die Textillage (6) in Laufrichtung LR elastisch ist.

4. Kraftübertragungsriemen nach einem der vorstehenden Ansprüche, **dadurch gekennzeichnet, dass** die Textillage (6) ein Flächengewicht von 10 bis 350 g/m² aufweist.

5. Kraftübertragungsriemen nach einem der vorstehenden Ansprüche, **dadurch gekennzeichnet, dass** die Textillage (6) aus Natur- und/oder Kunststofffasern besteht.

6. Kraftübertragungsriemen nach einem der vorstehenden Ansprüche, **dadurch gekennzeichnet, dass** die Textillage (6) ein Vlies ist.

7. Kraftübertragungsriemen nach einem der vorstehenden Ansprüche, **dadurch gekennzeichnet, dass** die Textillage (6) ein Gewebe ist.

8. Kraftübertragungsriemen nach einem der vorstehenden Ansprüche, **dadurch gekennzeichnet, dass** es ein Keilrippenriemen (10) oder ein Zahnriemen (100) ist.

9. Verfahren zur Herstellung eines Kraftübertragungsriemens, insbesondere eines Keilrippenriemens (10) oder eines Zahnriemens (100), nach einem der vorstehenden Ansprüche, bestehend aus mehreren elastomeren Lagen (1, 2, 3) und integrierten Zugsträngen (4), in einem mehrteiligen Vulkanisierwerkzeug, von dem mindestens ein erster Teil eine Profilierung aufweist, durch die während der Vulkanisation Kraftübertragungselemente (5a, 5b) mit einer Längsrichtung L und einer Querrichtung Q ausgebildet werden, **dadurch gekennzeichnet, dass** vor der Vulkanisation auf der dem profilierten ersten Teil des Werkzeugs zugewandten Seite des aus den mehreren Lagen (1, 2, 3) bestehenden Aufbaus eine mit einer Mehrzahl sich in Längsrichtung L erstreckenden und in mehreren parallel verlaufenden Reihen (R₁, R₂, Rₙ) hintereinander angeordneten Einschnitten (7) versehene Textillage (6) aufgelegt wird, die sich beim Ausbilden der Kraftübertragungselemente (5a, 5b) in Querrichtung Q dehnt.

10. Verfahren nach Anspruch 9, **dadurch gekennzeichnet, dass** die Textillage (6) durch die Dehnung in Querrichtung Q eine höhere Elastizität in Längsrichtung L erhält.

## Claims

1. Power transmission belt having a running direction (LR), at least one power transmission element (5), preferably a plurality of power transmission elements (5a, 5b) that are mutually spaced apart in a parallel manner, and a web-shaped textile layer (6) that is applied to a surface of the power transmission elements (5a, 5b) and is elongated, wherein the power transmission elements (5a, 5b) are covered and only in regions obscured by the textile layer (6), **characterized in that** the textile layer (6) is provided with a plurality of incisions (7) which extend sequentially in the longitudinal direction (L) of the power transmission elements (5a, 5b) and in the transverse direction (Q) are mutually spaced apart in a parallel manner in rows (R₁, R₂, ... Rₙ).

2. Power transmission belt according to Claim 1, **characterized in that** the region of the surface of the power transmission elements (5a, 5b) that is obscured by the textile layer (6) is at least 10% and at most 90%.

3. Power transmission belt according to Claim 1 or 2, **characterized in that** the textile layer (6) is elastic in the running direction LR.

4. Power transmission belt according to one of the preceding claims, **characterized in that** the textile layer (6) has a weight per unit area of 10 to 350 g/m².

5. Power transmission belt according to one of the preceding claims, **characterized in that** the textile layer (6) is composed of natural and/or synthetic fibres.

6. Power transmission belt according to one of the preceding claims, **characterized in that** the textile layer (6) is a non-woven fabric.

7. Power transmission belt according to one of the preceding claims, **characterized in that** the textile layer (6) is a woven fabric.

8. Power transmission belt according to one of the preceding claims, **characterized in that** said power transmission belt is a V-ribbed belt (10) or a timing belt (100).

9. Method for producing a power transmission belt, in particular a V-ribbed belt (10) or a toothed belt (100), according to one of the preceding claims, said power transmission belt being composed of a plurality of elastomer layers (1, 2, 3) and integrated tension strands (4), in a multi-part vulcanizing tool of which at least a first part has a profiled feature, by way of which power transmission elements (5a, 5b) having a longitudinal direction L and a transverse direction Q are configured during vulcanizing, **characterized in that,** prior to vulcanizing, a textile layer (6), provided with a plurality of incisions (7) that extend in the longitudinal direction L and are disposed in sequence in a plurality of rows (R₁, R₂, Rₙ) that run in parallel, is laid up on that side of the construction composed of the plurality of layers (1, 2, 3) that faces the profiled first part of the tool, said textile layer (6) in the configuration of the power transmission elements (5a, 5b) stretching in the transverse direction Q.

10. Method according to Claim 9, **characterized in that** the textile layer (6) on account of the elongation in the transverse direction Q is imparted a higher elasticity in the longitudinal direction L.

## Revendications

1. Courroie de transmission de forces ayant une direction de circulation (LR), au moins un élément de transmission de forces (5), de préférence une pluralité d'éléments de transmission de forces (5a, 5b) espacés parallèlement les uns des autres, et une couche textile (6) en forme de bande déposée sur une surface des éléments de transmission de forces (5a, 5b), les éléments de transmission de forces (5a, 5b) étant revêtus de la couche textile (6) et n'étant recouverts que localement,
**caractérisée en ce que**
la couche textile (6) est pourvue d'une pluralité d'entailles (7) qui s'étendent les unes derrière les autres en direction longitudinale (L) des éléments de transmission de forces (5a, 5b) et qui sont espacées les unes des autres en direction transversale (Q) en rangées parallèles (R₁, R₂, ... Rₙ).

2. Courroie de transmission de forces selon la revendication 1,
**caractérisée en ce que**
la zone de la surface des éléments de transmission de forces (5a, 5b), qui est recouverte par la couche textile (6) est au minimum de 10 % et au maximum de 90 %.

3. Courroie de transmission de forces selon la revendication 1 ou 2,
**caractérisée en ce que**
la couche textile (6) est élastique en direction de circulation LR.

4. Courroie de transmission de forces selon l'une des revendications précédentes,
**caractérisée en ce que**
la couche textile (6) présente un grammage de 10 à 350 g/m².

5. Courroie de transmission de forces selon l'une des revendications précédentes,
**caractérisée en ce que**
la couche textile (6) est constituée de fibres naturelles et/ou synthétiques.

6. Courroie de transmission de forces selon l'une des revendications précédentes,
**caractérisée en ce que**
la couche textile (6) est un non-tissé.

7. Courroie de transmission de forces selon l'une des revendications précédentes,
**caractérisée en ce que**
la couche textile (6) est un tissu.

8. Courroie de transmission de forces selon l'une des revendications précédentes,
**caractérisée en ce que**
elle est une courroie à nervures en V (10) ou une courroie dentée (100).

9. Procédé de fabrication d'une courroie de transmission de forces, en particulier d'une courroie à nervures en V (10) ou d'une courroie dentée (100), selon l'une des revendications précédentes, constituée de plusieurs couches élastomères (1, 2, 3) et de cordons de traction intégrés (4) dans un outil de vulcanisation en plusieurs parties, dont au moins une première partie présente un profilage par lequel des éléments de transmission de forces (5a, 5b) ayant une direction longitudinale L et une direction transversale Q sont réalisés pendant la vulcanisation,
**caractérisé en ce que**
avant la vulcanisation, sur le côté de la structure constituée des plusieurs couches (1, 2, 3) tourné vers la première partie profilée de l'outil, on pose une couche textile (6) pourvue d'une pluralité d'entailles (7) s'étendant en direction longitudinale L et agencées les unes derrière les autres en plusieurs rangées parallèles (R₁, R₂, Rₙ), couche qui s'allonge en direction transversale Q lors de la réalisation des éléments de transmission de forces (5a, 5b).

10. Procédé selon la revendication 9,
**caractérisé en ce que**
la couche textile (6) reçoit une élasticité plus élevée en direction longitudinale L par l'allongement en direction transversale Q.
